Europäisches Patentamt

European Patent Office

Office européen des brevets

(19)

(11) Veröffentlichungsnummer : **0 396 916 B1**

(12) **EUROPÄISCHE PATENTSCHRIFT**

(45) Veröffentlichungstag der Patentschrift :
04.11.92 Patentblatt 92/45

(51) Int. Cl.⁵ : **A01C 23/04**

(21) Anmeldenummer : **90106681.1**

(22) Anmeldetag : **06.04.90**

(54) **Vorrichtung zum Verteilen von Gülle auf ein Feld.**

(30) Priorität : **11.04.89 DE 3911731**

(43) Veröffentlichungstag der Anmeldung :
**14.11.90 Patentblatt 90/46**

(45) Bekanntmachung des Hinweises auf die
Patenterteilung :
**04.11.92 Patentblatt 92/45**

(84) Benannte Vertragsstaaten :
**NL**

(56) Entgegenhaltungen :
**DE-A- 2 746 230**
**DE-A- 2 941 046**

(56) Entgegenhaltungen :
**AGRARTECHNIK, Oktober 1986, Seite 27, Wür-**
**zburg, DE; "Neues System zur Gülleverre-**
**gnung"**
**LANDTECHNIK, Band 35, Nr. 10, Oktober 1980,**
**Seiten 462-464, Lehrte, DE; H. SOWELL et al.:**
**"Entwicklung und Tendenzen in derBere-**
**gnungstechnik"**

(73) Patentinhaber : **Maas, Karl**
**Heven 74**
**W-4437 Schöppingen (DE)**

(72) Erfinder : **Maas, Karl**
**Heven 74**
**W-4437 Schöppingen (DE)**

(74) Vertreter : **Schulze Horn, Stefan, Dipl.-Ing.**
**M.Sc.**
**Goldstrasse 36**
**W-4400 Münster (DE)**

**Beschreibung**

Die Erfindung betrifft eine Vorrichtung zum Verteilen von Gülle auf ein Feld nach dem Oberbegriff des Patentanspruchs 1.

Bisher bekannte Vorrichtungen zum Verteilen von Gülle auf ein Feld sind so gestaltet, daß ein mit Gülle gefüllter Behälteranhänger von einem Traktor über das Feld gezogen wird, wobei die Gülle mittels einer Sprühvorrichtung auf das Feld ausgesprüht und über dessen Fläche verteilt wird.

Ein Nachteil besteht darin, daß, weil das Gewicht des vom Traktor über das Feld gezogenen Behälteranhängers sehr groß ist, beim Fahren des Traktors mit dem schweren Anhänger insbesondere über ein bereits in Saat stehendes Feld durch die entstehenden tiefen Reifenspuren Beschädigungen der Keimlinge auftreten.

Da durch in neuerer Zeit durchgeführte Flurbereinigungen die Entfernung vom jeweiligen Bauernhof zu den Feldern kleiner geworden ist, ist bereits vorgeschlagen worden, die Gülle vom Hof über einen Gülleschlauch zu einem das Feld bearbeitenden Traktor zu leiten, welcher den Gülleschlauch während der Arbeit und während der Fahrt über das Feld hinter sich herzieht und dabei die Gülle ausbringt.

Eine derartige bekannte Anordnung weist jedoch den Nachteil auf, daß der über eine jeweils längere Wegstrecke hinter dem Traktor hergezogene Gülleschlauch dich in den Boden eingräbt, wodurch sowohl der Gülleschlauch als auch das Feld beschädigt werden kann.

Es ist auch bereits vorgeschlagen worden (s. DE-Z "Agrartechnik", Oktober 1986, S.27), auf einen als Schlauchwagen gestalteten Kraftfahrzeug eine einen Gülle zuspeisenden Gülleschlauch aufwickelnde bzw. abrollende Vorratstrommel anzuordnen wobei das freie Ende des Gülleschlauchs mit einem sich außerhalb des Feldes befindenden Güllebehälter verbunden sein muss.

Eine derartige bekannte Vorrichtung weist jedoch ebenfalls den Nachteil auf, daß der hinter dem Fahrzeug ausgelegte Gülleschlauch nach Wenden des Fahrzeuges für die Rückfahrt auf einer parallel verlaufenden Fahrspur zur neuen Fahrspur hinübergezogen werden muß, wobei sowohl das Feld als auch der Gülleschlauch beschädigt werden kann, da auch hier die Gefahr besteht, daß der Gülleschlauch sich hierbei in das Feld eingräbt.

Der Erfindung liegt die Aufgabe zugrunde, eine Vorrichtung zum Verteilen von Gülle auf ein Feld zu schaffen, welche sowohl Beschädigungen des Gülleschlauchs als auch Beschädigungen des Feldes durch den Gülleschlauch vermeidet.

Die Aufgabe wird durch eine Vorrichtung mit den kennzeichnenden Merkmalen des Patentanspruchs 1 gelöst. Weitere vorteilhafte Ausgestaltungen der Vorrichtung nach Anspruch 1 sind durch die Merkmale der Ansprüche 2 bis 8 gekennzeichnet.

Durch die erfindungsgemäße Gestaltung ergibt sich der Vorteil, daß dadurch, daß der Güllebehälter außerhalb des Feldes abgestellt wird und die Gülle durch einen auf dem Feld abzusetzenden und entlang derselben Linie wieder aufzunehmenden Gülleschlauch der am Schlauchwagen befindlichen Gülle-Verteileinrichtung zugeführt wird, tiefe und in das Feld eingreifende Reifenspuren sowie auch Beschädigungen des Feldes durch den Gülleschlauch vermieden werden. Des weiteren werden dadurch, daß der Gülleschlauch nicht vom arbeitenden Fahrzeug nachgezogen wird, Beschädigungen des Gülleschlauchs vermieden.

Eine besonders vorteilhafte Ausgestaltung besteht darin, daß die Gülle über an sich bekannte, bodennah angeordnete Schleppschläuche auf dem Feld verteilt wird, wodurch die Geruchsbelästigung der Umwelt auf ein Minimum reduziert werden kann.

Es ist des weiteren auch vorteilhaft, daß der Gülleschlauch beim Aufwickeln desselben auf die auf dem Schlauchwagen befindliche Vorratstrommel mittels eines Führungsschlittens in genau nebeneinanderliegenden Windungen auf die Vorratstrommel aufgewickelt werden kann, wodurch Beschädigungen des Gülleschlauchs während des Wickelvorganges vermieden werden.

In der Zeichnung ist ein Ausführungsbeispiel des Gegenstandes der Erfindung dargestellt. Es zeigt:

Fig. 1 eine Seitenansicht auf einen Schlauchwagen mit einer auf einer Plattform desselben angeordneten Vorrichtung zum Verteilen der Gülle;

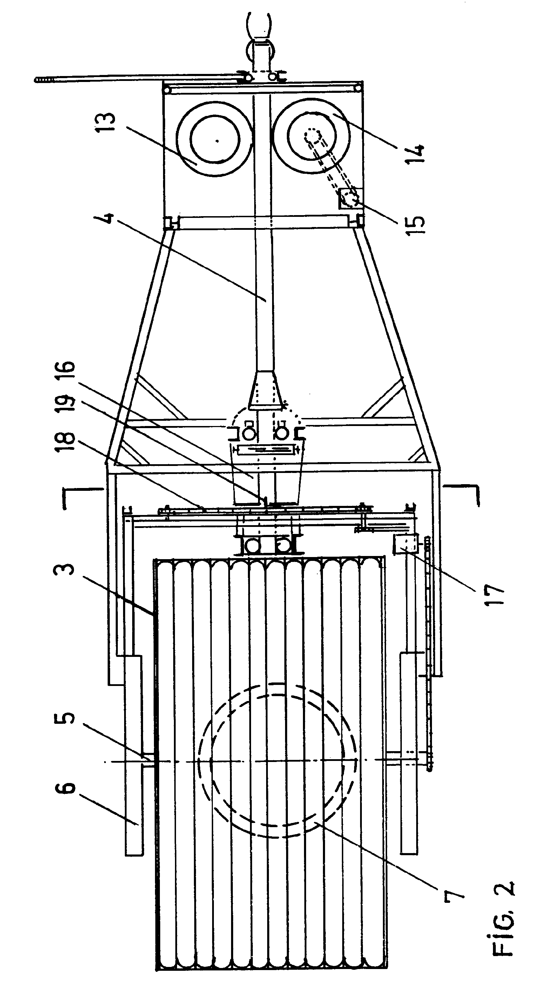

Fig. 2 eine Draufsicht auf die auf dem Schlauchwagen angeordnete Vorrichtung gemäß Fig. 1;

Fig. 3 eine Seitenansicht auf die auf der Plattform des Schlauchwagens angeordnete Vorrichtung in gleicher Seitenansicht wie gemäß Fig. 1, jedoch in vergrößertem Maßstab;

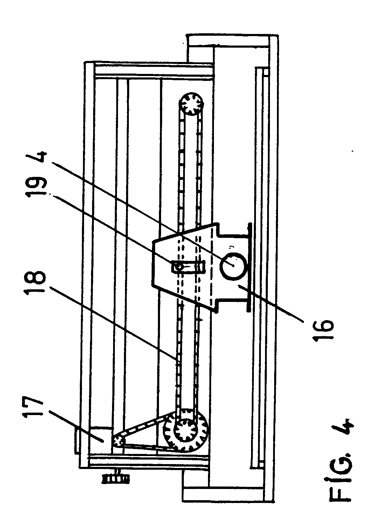

Fig. 4 einen Schnitt nach der Linie IV-IV gemäß Fig. 3 durch den den Gülleschlauch beim Aufwickeln auf die Vorratstrommel führenden Führungsschlitten;

Fig. 5 eine schematische Darstellung der Arbeitsweise der Vorrichtung während der Arbeit auf einem Feld in Vogelschau.

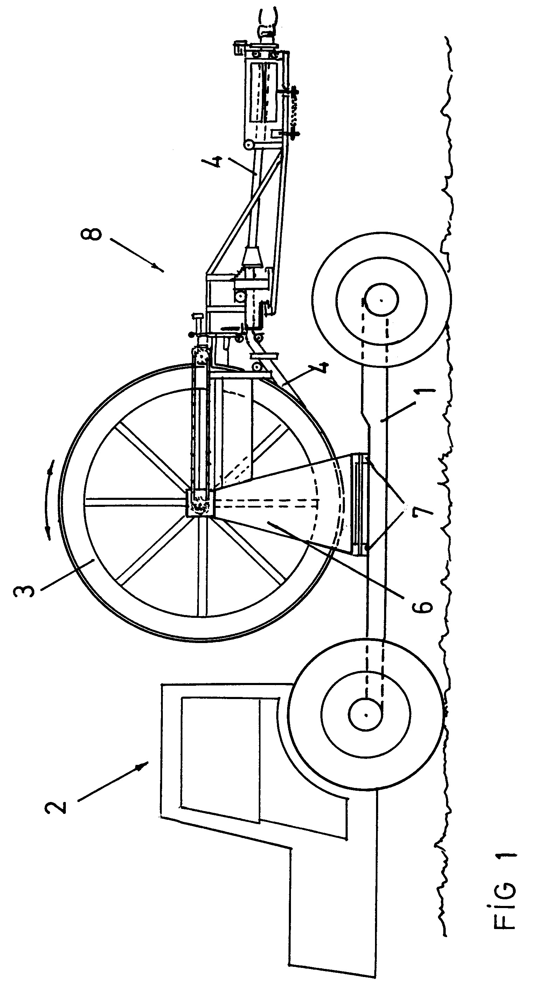

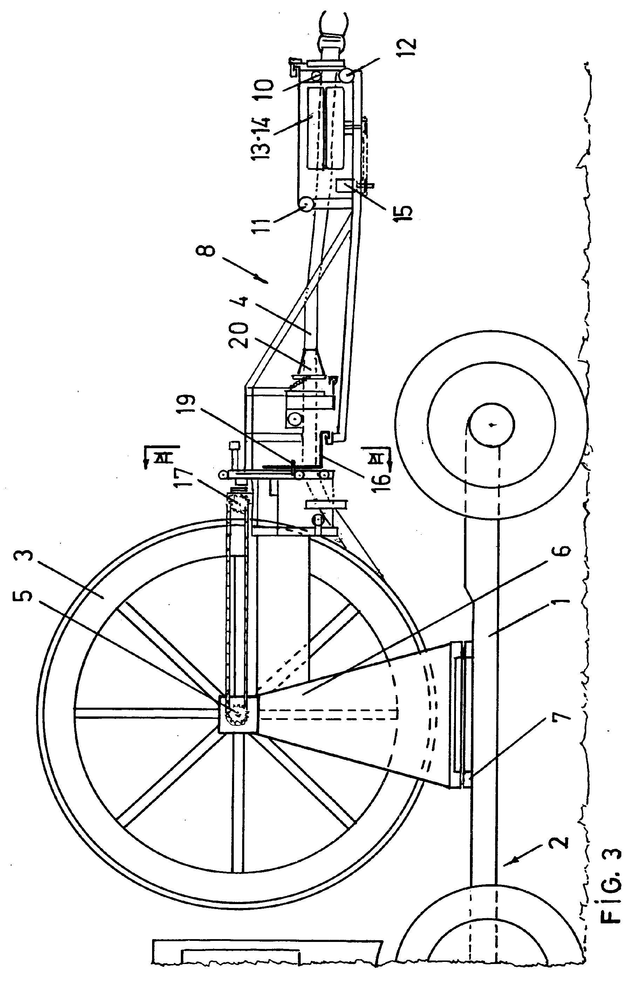

Gemäß Fig. 1 und Fig. 3 ist auf der Plattform 1 eines Schlauchwagens 2 eine Vorratstrommel 3 für einen Gülleschlauch 4 vorgesehen, auf welche der Gülleschlauch 4 bei Schlauchaufnahme aufgewickelt wird, wobei dann die Vorratstrommel 3 durch einen Kraftantrieb in Aufwickelrichtung angetrieben wird. Die horizontale Drehachse 5 der Vorratstrommel 3 ist in Lagern eines Lagerbockes 6 gelagert, der mittels eines auf dem Boden der Plattform 1 angeordneten Drehkranzes 7 um mehr als 180° gedreht werden kann. Mit diesem Lagerbock 6 ist ein Ausleger 8 starr verbunden, der bei Drehung des Lagerbockes 6 zusammen mit diesem gedreht wird. Der Gülleschlauch 4 wird durch eine am Ende des Auslegers angeordnete Führungseinrichtung geführt, die aus oberen, horizontalen Führungsrollen 10 und 11 und aus einer unteren Führungsrolle 12 besteht, wobei der Gülleschlauch 4 zwischen zwei horizontal beiderseits neben ihm angeordneten, mit Autoreifen bestückten Rädern 13 und 14 hindurchgeleitet wird. Bei Vorwärtsfahrt des Schlauchwagens 2 wird ein Öldruckmotor 15 eingeschaltet, der die Räder 13 und 14 in Abzugsrichtung des Gülleschlauches 4 von der Vorratstrommel 3 in Drehung versetzt, so daß bei der Fahrt des Schlauchwagens 2 in der einen Richtung der Gülleschlauch 4 von der Vorratstrommel 3 mittels dieser Räder 13 und 14 abgezogen wird.

An dem der Vorratstrommel 3 näher liegenden Ende des Auslegers 8 ist ein Führungsschlitten 16 vorgesehen, der beim Aufwickeln des Gülleschlauches 4 auf die Vorratstrommel 3 den Gülleschlauch 4 in horizontaler Richtung synchron mit der Drehbewegung der Vorratstrommel 3 derart führt, daß der Gülleschlauch 4 in nebeneinanderliegenden Windungen aufgewickelt werden kann, so daß der Gülleschlauch 4 beim Aufwickeln nicht beschädigt wird. Die den Führungsschlitten 16 führende Vorrichtung besteht aus einem auf der horizontalen Drehachse 5 der Vorratstrommel 3 sitzenden Zahnrad, welches mit einer Antriebskette kämmt, die mit einem Winkelgetriebe 17 im Eingriff steht, von welchem eine umlaufende Kette 18 in Bewegung versetzt wird, welche einen Mitnehmerstift 19 trägt, der in einen lotrechten Schlitz des Führungsschlittens 16 eingreift und derart bei der Umlaufbewegung der umlaufenden Kette 18 den Führungsschlitten 16 in hin- und hergehende Bewegung versetzt und zwar jeweils synchron mit der Drehbewegung der Vorratstrommel 3. Am Führungsschlitten 16 ist ein den Gülleschlauch 4 umfangsmäßig umfassender Schmutzabstreifer 20 angeordnet.

Das innere Ende des auf der Vorratstrommel 3 aufgewickelten Gülleschlauches 4 ist mittels eines koaxial durch die hohle Drehachse 5 der Vorratstrommel 3 geführten Verbindungsrohres über eine Drehgleitmuffe mit an einem Querträger 21 des Schlauchwagens 2 befestigten, die Gülle bodennah auf das Feld leitenden Schleppschläuchen 22 verbunden.

Die Arbeitsweise der Vorrichtung ist folgende:

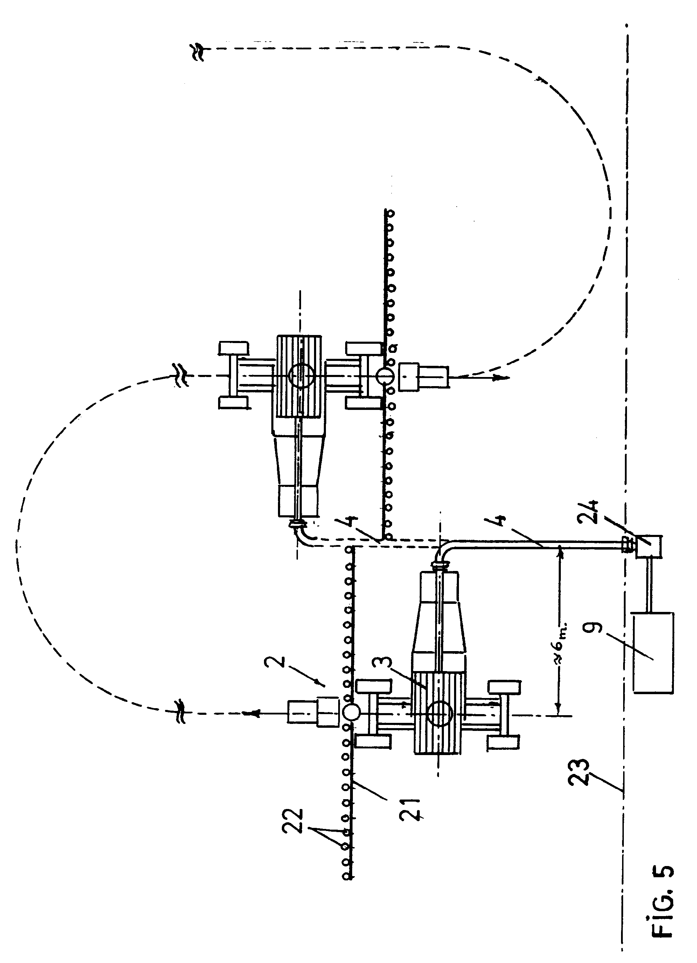

Wie in Fig. 5 der Zeichnung dargestellt, befindet sich der Güllebehälter 9 außerhalb des Feldrandes 23 des zu düngenden Feldes. Der Güllebehälter 9 ist mit einer Pumpe 24 ausgestattet, wobei das freie Ende des Gülleschlauches 4 an diese Pumpe förderseitig angeschlossen ist.

In Arbeitsstellung ist die den Gülleschlauch 4 tragende Vorratstrommel 3 zusammen mit dem Ausleger 8 seitlich zur Fahrtrichtung des Schlauchwagens 2 geschwenkt, so daß der Gülleschlauch 4 über den Ausleger 8 seitlich des Fahrweges des Schlauchwagens 2 frei auf das Feld ausgelegt werden kann, wobei das Auslegen und Abrollen des Gülleschlauches 4 durch die vom Öldruckmotor 15 angetriebenen, mit Autoreifen bereiften Räder 13 und 14 unterstützt wird. Hat der Schlauchwagen 2 seine - vom Güllebehälter 9 aus gesehen - äußerste Stellung erreicht, so schwenkt er im engen Schwenkbogen in Richtung zum Ausleger hin zur Gegenfahrtrichtung um, wobei der Gülleschlauch 4 annähernd auf der Stelle bleibt und erst bei Rückfahrt des Schlauchwagens 2 durch den auf die Vorratstrommel 3 nun einwirkenden Kraftantrieb über den Führungsschlitten 16 wieder auf die Vorratstrommel aufgewickelt wird, wobei der Gülleschlauch 4 bei der Rückfahrt des Schlauchwagens 2 schlauch- und feldschonend wieder von der Oberfläche des Feldes aufgenommen wird. Nach Beendigung der Rückfahrt wiederholt sich das Arbeitsspiel. Der Ausleger 8 kann mittels einer Federung um seine quer zur Fahrtrichtung liegenden Lage spielen, so daß er bei Unregelmäßigkeiten der Fahrgeschwindigkeit oder des Untergrundes federnd nachgeben kann.

Da der Ausleger 8 im Drehkranz 7 um über 180° gedreht werden kann, kann der Gülleschlauch 4 während der Fahrt wahlweise auf der einen oder der anderen Seite des Schlauchwagens 2 ausgelegt bzw. aufgenommen werden.

Beim Auslegen des Gülleschlauches 4 während der Fahrt wird durch die am freien Ende des Auslegers 8 angeordneten bereiften Räder 13 und 14 über den Öldruckmotor 15 eine auf den Gülleschlauch 4 einwirkende Zugkraft einer solchen Größe eingestellt, daß der Schlauch gerade bleibt, während er von der Vorratstrommel 3 abgezogen und auf dem Feld ausgelegt wird; hierbei übt der abgeschaltete Kraftantrieb der Vorratstrommel 3 eine zusätzliche Bremskraft aus, die sich zum Geraderichten des Gülleschlauches 4 günstig auswirkt.

## Patentansprüche

1. Vorrichtung zum Verteilen von Gülle auf ein Feld, mit einer auf einem als Schlauchwagen gestalteten Kraftfahrzeug angeordneten, einen von außerhalb des Feldes gespeisten Gülleschlauch aufwickelnden bzw. abrollenden Vorratstrommel, dadurch gekennzeichnet, daß die Vorratstrommel (3) mit ihrer horizontalen Drehachse (5) auf einem Lagerbock (6) gelagert ist, der zusammen mit einem mit diesem starr verbundenen, den Gülleschlauch (4) führenden Ausleger (8) auf dem Schlauchwagen (2) um eine vertikale Achse um mehr als 180° frei drehbar gelagert ist.

2. Vorrichtung nach Anspruch 1, dadurch gekennzeichnet, daß die Vorratstrommel (3) beim Schlauchaufnehmen mittels einer Kraftantriebseinrichtung in Drehung versetzbar ist.

3. Vorrichtung nach wenigstens einem der Ansprüche 1 und 2, dadurch gekennzeichnet, daß die Vorratstrommel (3) in Gegenrichtung beim Schlauchablegen frei drehbar ist.

4. Vorrichtung nach wenigstens einem der Ansprüche 1 bis 3, dadurch gekennzeichnet, daß am Ende des Auslegers (8) zwei beim Ablegen bzw. Aufnehmen des Gülleschlauches (4) durch einen Öldruckmotor (15) antreibbare, kraftschlüssig an den Gülleschlauch andrückbare und auf den Gülleschlauch (4) eine diesen gerade ausrichtende Zugkraft übertragende bereifte Räder (13, 14) angeordnet sind.

5. Vorrichtung nach wenigstens einem der Ansprüche 1 bis 4, dadurch gekennzeichnet, daß ein den Gülleschlauch (4) beim Aufwickeln synchron mit der Drehbewegung der Vorratstrommel (3) hin- und herführender Führungsschlitten (16) vor der Vorratstrommel (3) vorgesehen ist.

6. Vorrichtung nach Anspruch 5, dadurch gekennzeichnet, daß am Führungsschlitten (16) den Gülleschlauch (4) umfassend führende, Führungsrollen (13, 14 bzw. 10, 11) mit senkrechter bzw. waagerechte. Achse vorgesehen sind.

7. Vorrichtung nach Anspruch 5 oder 6, dadurch gekennzeichnet, daß am Führungsschlitten (16) ein den Gülleschlauch (4) umfangmäßig umfassender Schmutzabstreifer (20) angeordnet ist.

8. Vorrichtung nach wenigstens einem der Ansprüche 1 bis 7, dadurch gekennzeichnet, daß das innere Ende des auf der Vorratstrommel (3) aufgewickelten Gülleschlauches (4) mittels eines axial durch die hohle Drehachse (5) der Vorratstrommel (3) geführten Verbindungsrohres über eine Drehgleitmuffe mit an einem Querträger (21) des Schlauchwagens (2) befestigten, die Gülle bodennah auf das Feld leitenden Schleppschläuchen (22) verbunden ist.

## Claims

1. Device for distributing semi-liquid manure on a field, comprizing a feed drum which on revolving takes up or uncoils a semi-liquid mature hose which is fed from a source outside the field, whereby the device is mounted on a motor vehicle designed as a hose tender, characterized in that the feed drum (3) with its horizontal axis of rotation (5) is carried on a bearing block (6) on the hose tender, whereby the drum, together with the guide boom (8) of the semi-liquid manure hose (4), to which boom the drum is connected rigidly, is mounted so as to rotate freely for more than 180° around its vertical axis.

2. Device according to claim 1, characterized in that the feed drum (3) whilst taking up the hose can be set in rotation by means of a mechanical drive device.

3. Device according to either claim 1 or 2, characterized in that the feed drum (3) whilst uncoiling the hose is freely rotatable in the other direction.

4. Device according to at least one of the claims 1 to 3, characterized in that two tyred wheels (13, 14) are mounted at the end of the boom (8), whereby during the uncoiling or taking up of the semi-liquid manure hose (4), the wheels (13, 14) are drivable and capable of being pressed on the semi-liquid manure hose (4) by means of a oil-hydraulic motor (15).

5. Device according to at least one of the claims 1 to 4, characterized in that a guide block (16) is provided which, during the taking up of the semi-liquid manure hose (4), moves to und fro synchronously with the rotation of the feed drum (3) in front of the feed drum (3).

6. Device according to claim 5, characterized in that, at the guide block, the semi-liquid manure hose is equipped with encircling guiding rollers (respectively 13, 14 and 10, 11) rotating respectively about a vertical or a horizontal axis.

7. Device according to claim 5 or 6, characterized in that a dirt scaper (20), which encircles the outer circumference of the semi-liquid manure hose (4), is mounted on the guide block (16).

8. Device according to at least one of the claims 1 to 7, characterized in that the inner end of the semi-liquid manure hose (4) rolled up on the feed drum (3) is connected by means of a connecting tube leading axially through the hollow rotatable axle (5) of the feed drum (3) via a rotatable sliding bushing to a tow tube (22), which is attached to a crossbeam (21) of the hose tender (2), for spraying the semi-liquid manure on the field close to the ground.

## Revendications

1. Dispositif d'épandage de lisier sur un champ, comprenant un tambour d'alimentation qui est disposé sur un véhicule réalisé sous forme de chariot dévidoir et enroule et déroule un tuyau de lisier alimenté à partir de l'extérieur du champ, caractérisé en ce que le tambour d'alimentation (3) est monté avec son axe de rotation horizontal (5) sur un palier (6) qui est monté avec un bras (8) relié rigidement audit palier et guidant le tuyau de lisier (4), sur le chariot dévidoir (2) de manière à pouvoir pivoter librement autour d'un axe vertical sur plus de 180°.

2. Dispositif selon la revendication 1, caractérisé en ce que le tambour d'alimentation (3) peut être entraîné en rotation au moyen d'un entraînement mécanique lorsqu'il reçoit le tuyau.

3. Dispositif selon au moins l'une des revendications 1 et 2, caractérisé en ce que le tambour d'alimentation (3) peut tourner librement dans le sens inverse lorsqu'il dépose le tuyau.

4. Dispositif selon au moins l'une des revendications 1 à 3, caractérisé en ce que deux roues (13, 14) équipées de pneus qui peuvent être entraînées par un moteur à pression d'huile (15) lors du dépôt ou de la réception du tuyau de lisier (4), peuvent être pressées sur le tuyau de lisier par frottement et transmettent au tuyau de lisier (4) une force de traction qui le positionne en ligne droite, sont disposées à l'extrémité du bras (8).

5. Dispositif selon au moins l'une des revendications 1 à 4, caractérisé en ce qu'un coulisseau (16) déplaçant le tuyau de lisier (4) lors de son enroulement selon un mouvement de va-et-vient synchrone à la rotation du tambour d'alimentation (3) est prévu devant le tambour d'alimentation (3).

6. Dispositif selon la revendication 5, caractérisé en ce que des galets de guidage (13, 14 ou 10, 11) qui guident le tuyau de lisier (4) en l'entourant et présentent un axe vertical ou horizontal sont prévus sur le coulisseau (16).

7. Dispositif selon la revendication 5 ou 6, caractérisé en ce qu'un racleur d'impuretés (20) entourant le tuyau de lisier (4) sur son pourtour est disposé sur le coulisseau (16).

8. Dispositif selon au moins l'une des revendications 1 à 7, caractérisé en ce que l'extrémité intérieure du tuyau de lisier (4) enroulé sur le tambour d'alimentation (3) est reliée au moyen d'un tuyau de raccordement guidé axialement dans l'axe de rotation (5) creux du tambour d'alimentation et par l'intermédiaire d'un manchon de glissement, à des tuyaux traînants (22) fixés sur une traverse (21) du chariot dévidoir (2) et répandant le lisier sur le champ à proximité du sol.

FIG 1

EP 0 396 916 B1

FIG. 2

EP 0 396 916 B1

FIG. 3

FIG. 4

FIG. 5